# EUROPÄISCHE PATENTSCHRIFT

(11) **EP 2 210 459 B1**
(45) Veröffentlichungstag und Bekanntmachung des Hinweises auf die Patenterteilung: **08.02.2012**
(21) Anmeldenummer: 10000494.4
(22) Anmeldetag: 20.01.2010
(51) Int. Cl.: A01B 29/04

(54) **Walzenförmige Bodenbearbeitungsvorrichtung**
Roller-shaped soil cultivation device
Dispositif de traitement des sols en forme de rouleau

(30) Priorität: 21.01.2009 DE 202009000721 U; 08.05.2009 DE 202009006698 U
(43) Veröffentlichungstag der Anmeldung: 28.07.2010
(73) Patentinhaber: Hendlmeier, Konrad, 93149 Untersanding (DE)
(72) Erfinder: Hendlmeier, Konrad, 93149 Untersanding (DE)
(74) Vertreter: Glück, Martin

(56) Entgegenhaltungen:
- DE-A1-102006 048 157
- DE-U1- 20 106 545
- DE-U1- 29 608 373
- NL-A- 6 806 183

## Beschreibung

Die Erfindung betrifft eine walzenförmige Vorrichtung für Bodenbearbeitungsvorgänge und Sävorgänge mit Hilfe von rotierenden Stempelwerkzeugen, die auf einer horizontalen Nabe parallel zueinander rotierend angeordnet sind.

Derartige Bodenbearbeitungsvorrichtungen in Form von Stempelwalzen sind z.B. Gegenstand des EP-Patentes 0 998 185 B1. Die Herstellung derartiger Stempelelemente, aus deren Vielzahl die Stempelwalze besteht, ist relativ aufwendig, da die einseitig eingespannten Federelemente hohe Kosten verursachen und die Federelemente hohen Beanspruchungen ausgesetzt sind.

Aus der DE 201 06 545 U1 ist ferner eine Vorrichtung zum Verfestigen des Bodens bekannt, welche walzenförmige oder radförmige, parallel zueinander auf einer Achse befindlichen Werkzeugelemente umfasst, die eine im wesentlichen ringförmige Umfangsfläche umfassen.

Die DE 10 2006 048 157 A1 offenbart eine Ackerwalze für ein Bodenbearbeitungsgerät, welche als Vor- oder Nachlaufwalze oder mit einem geeigneten, die Walze aufnehmenden Anbaurahmen als eigenständiges Gerät einsetzbar ist. Die Ackerwalze umfasst eine drehbar gelagerte Achse, auf der mehrere Walzenringe aufgenommen sind. Die Walzringe weisen eine Ringschneide auf und sind lediglich über eine Ringspeiche mit einer Ringnabe fest verbunden. Die Ringschneide ist über einen Ringspalt geteilt und ermöglicht damit ein elastisches Verformen der Ringschneide des ansonsten einstückig ausgebildeten Walzenringes.

Es ist deshalb Aufgabe der Erfindung, die aus dem Stand der Technik sich ergebenden Schwierigkeiten dadurch zu beheben, dass eine vereinfachte und kostengünstigere Herstellung sowie eine effektivere Arbeitsweise derartiger Stempelelemente vorgeschlagen wird.

Gemäß der Erfindung wird diese Aufgabe dadurch gelöst, dass die radial inneren Enden der Speichen am Nabenrohr befestigt und die radial äußeren Enden der Speichen mit dem Ringelement in radialer Richtung beweglich und auslenkbar verbunden sind, und zwar derart; dass die Ringumfangsfläche in Achsrichtung der Speiche radial verschiebbar geführt ist. Weitere Ausgestaltungen der Erfindung sind Gegenstand der Unteransprüche.

Im Gegensatz zu den bekannten Bodenbearbeitungsvorrichtungen, wie sie vorstehend insbes. als Stempelwalzen angegeben sind, sind die Bodenbearbeitungsvorrichtungen nach der Erfindung als geschlossene Ringelemente mit kontinuierlicher Umfangsfläche beispielsweise aus einem bandförmigen Material, insbesondere Federstahl ausgebildet, die im Ruhezustand und bei geringer Beanspruchung einzeln in einer ersten Betriebsstufe ihre Kreisform durch Relativbewegung der Speichengabeln gegenüber der Ringumfangsfläche in vertikaler und/oder in horizontaler Richtung beibehalten, wodurch die parallelen Bodenbearbeitungselemente bei Verstopfungen individuell oder miteinander zusammenwirkend z.B. horizontale Bewegungen relativ zueinander ausführen und diese Verstopfungen auflösen können, und in einer zweiten Betriebsstufe bei höherer Beanspruchung und bei stärkerem Eingriff mit dem Boden bzw. Unstetigkeiten im oder auf dem Boden fortlaufend über den Umfang versetzt nachgiebig in begrenztem Umfang deformiert werden, so dass an dieser Eingriffstelle des Ringes mit dem Boden vorübergehend eine Abflachung bzw. Abweichung von der Ringform und bei Verlassen des Bodeneingriffes aufgrund der Nachgiebigkeit wieder eine Rückführung in die Kreisform stattfindet. Auf diese Weise führen aufeinander folgende Abschnitte des Ringumfanges insgesamt eine walkende bzw. oszillierende Bewegung aus, wobei der Abstand zweier gegenüberliegender Gabeln größer ist als der Durchmesser des deformierten Ringumfanges. Dabei wird der Abstand zwischen der Nabenoberfläche und dem Ringumfang an der Bodeneingriffsstelle kleiner, die Speichen selbst aber verändern ihre Länge nicht, sodass gemäß der Erfindung vorgeschlagen wird, dass zusätzlich zu der radialen Bewegung des Speichenelementes relativ zum Umfangsring der Umfangsring selbst in begrenztem Maß in radialer Richtung und relativ zur Ringebene deformierbar ist.

Diese Beweglichkeit zwischen Speichen und Umfangsfläche des Ringes wird z.B. dadurch erreicht, dass das radial äußere Speichenende gabelförmig ausgebildet und der Umfangsring im Gabelkopf in radialer Richtung sowie in Querrichtung verschiebbar angeordnet ist. Alternativ kann das radial äußere Gabelende z. B. bolzenartig in einer entsprechenden Aussparung der Umfangsfläche des Ringes geführt oder mit einer vergleichbaren konstruktiven Ausgestaltung vorgesehen sein. Die äußeren Enden der Speichen in Gabel- oder Bolzenform wirken dabei als Traktionsmittel für den Bodenantrieb der Ringelemente.

Die lichte Weite der Gabelöffnung ist dabei vorzugsweise im Vergleich zur Breite der Umfangsfläche des Ringelementes so ausgelegt, dass die Umfangsfläche sich in der Gabelöffnung mit Spiel bewegen kann und damit der Abstand zweier benachbarter Ringelemente beim Auftreffen auf Hindernisse, z.B. Steine, Erdbrocken, Klutenknäuel und dgl. sich verändern kann, so dass z.B. auf der Einlaufseite (in Fahrtrichtung gesehen) der Abstand verkleinert und entsprechend auf der Ablaufseite vergrößert wird und somit die Klemmwirkung am auslaufenden Ende aufgehoben und der Abwurf des Hindernisses entscheidend unterstützt wird.

Der Gabelkopf des äußeren Endes der Speiche kann bei einer weiteren Ausführungsform nach der Erfindung auch so ausgebildet sein, dass die beiden Gabelzinken am äußeren Ende miteinander verbunden oder aufeinander zu gebogen sind, so dass damit eine Begrenzung der Relativbewegung zwischen Speiche und Umfangsring erfolgt. Die Ringelemente selbst, die von den äußeren Enden der Speichen aufgenommen werden, können anstelle eines kontinuierlichen Ringelementes, das z.B. aus einem Stahlband besteht, dessen beide Enden zu einem Ring geformt und an der Verbindungsstelle miteinander verbunden, z.B. verschweißt sind, so ausgeführt sein, dass die beiden freien Enden des Stahlbandes einander überlappen und durch eine Schraubverbindung miteinander zu einem Ring , oder mit Hilfe einer Überbrückungsvorrichtung, z.B. einer Lasche, miteinander verbunden sind. Des Weiteren kann die Ringumfangsfläche profiliert, z.B. mit V-, U-, T- oder dergl. Profil, rohrförmig, z.B. als Flachrohr, oder aus Vollmaterial ausgebildet sein. Vorzugsweise ist im Falle des T-Profils die Abmessung des vertikalen Balkens des T größer als des horizontalen Balkens.

Die erfindungsgemäße Vorrichtung arbeitet in der Weise, dass bei geringem Druck, der vom Boden auf die Umfangsfläche der Ringelemente ausgeübt wird, die durch Unstetigkeiten, z.B. Hindernisse wie Steine, Kluten oder dergl. im Boden auftretende Höhen- oder Vorwärtsbewegung über die Gabel zum Anheben der Ringelemente ausreicht, um die an der Maschine eingestellte Auslenkung festzulegen, dass aber bei höherem bzw. sehr hohem Druck die Reaktionskraft der Ringelemente so groß ist, dass eine Verformung des in Bodeneingriff stehenden Ringabschnittes erfolgt. Je nach Position des Hindernisses tritt dabei die Verformung des Ringabschnittes in der Ringebene bzw. in der Speichenebene durch Deformieren (Abflachen) des Ringabschnittes oder quer zur Ringebene durch seitliches Ausweichen des betreffenden Ringabschnittes in Form einer "eiernden" Bewegung auf.

Bei einer derartigen asymmetrischen Auslenkung der in Bodenkontakt stehenden Ringabschnitte wird gleichzeitig erreicht, dass ein Reinigungseffekt bei anhaftendem Erdreich und Pflanzenrückständen erzielt werden kann, da der Abstand zweier benachbarter Ringabschnitte sich in der einen Ebene verkleinert und dadurch ein Selbstreinigungseffekt erzielt wird, wenn Erdreich und Pflanzenrückstände zwischen den Speichen und den Ringabschnitten sich aufbauen.

In der Regel sind die Bodenwerkzeuge so ausgelegt, dass die Ringelemente kreisringförmige Gestalt haben und die Speichen jeweils um 120° gegeneinander versetzt angeordnet und gleich lang sind. In bestimmten Fällen kann es jedoch zwecksmäßig sein, die Länge der Speichen unterschiedlich auszubilden, z.B. eine Speiche länger als die übrigen beiden, so dass die Ringelemente oder einige davon exzentrisch zum Nabenrohr positioniert sind und damit eine walkende Bewegung der asymmetrisch auf dem Nabenrohr befestigten Ringelemente erhalten wird.

Wenn die erfindungsgemäße Vorrichtung zum Durchführen von Sävorgängen bestimmt ist, weist sie den Ringwerkzeugen zugeordnete, in Fahrtrichtung vorlaufende Auslaufvorrichtungen für Saatgut- und/oder Düngerkörner auf, wobei die Auslaufvorrichtungen in Form von Rohren, Schläuchen oder dgl. z.B. mit Rechenzinken verbunden sind, die ggf. als Nivelliervorrichtungen arbeiten und das Saatgutbett vorbereiten sowie das Saatgut darauf ablegen.

Nachstehend wird die Erfindung in Verbindung mit der Zeichnung anhand von Ausführungsbeispielen erläutert. Es zeigt:
- Fig. 1: eine schematische Darstellung eines Ringelementes einer erfindungsgemäßen Bodenbearbeitungsvorrichtung in Aufsicht und in Achsrichtung gesehen,
- Fig. 2: eine Seitenansicht der Darstellung nach Fig. 1 in größerem Maßstab,
- Fig. 3: eine gegenüber der Fig. 2 abgeänderte Ausführungsform des Speichenkopfes,
- Fig. 4: eine andeutungsweise perspektivische Darstellung eines Ringelementes mit Speichenanordnung und mit unterschiedlichen Querschnitten des Ringelementprofils,
- Fig. 5: eine schematische Darstellung einer anderen Ausführungsform des Speichenkopfes,
- Fig. 6: eine Detaildarstellung der Überlappungsstelle des Ringelementes im Schnitt,
- Fig. 7: eine schematische Darstellung eines Ringelementes in deformiertem Zustand an der Eingriffsstelle mit dem Erdreich,
- Fig. 8: eine weitere Ausführungsform des Ringelementes nach der Erfindung mit einer Speiche größerer Länge im Vergleich zu den beiden übrigen Speichen,
- Fig. 9: eine schematische Darstellung einer Aufsicht auf das Nabenrohr mit mehreren Ringelementen und Särillen mit Saatkorn,
- Fig. 10: eine schematische Darstellung einer Bodenverarbeitungsvorrichtung mit Saatgutausläufen in Seitenansicht, und
- Fig. 11: eine Aufsicht auf einen Abschnitt einer weiteren Ausführungsform einer Bodenbearbeitungsvorrichtung nach der Erfindung.

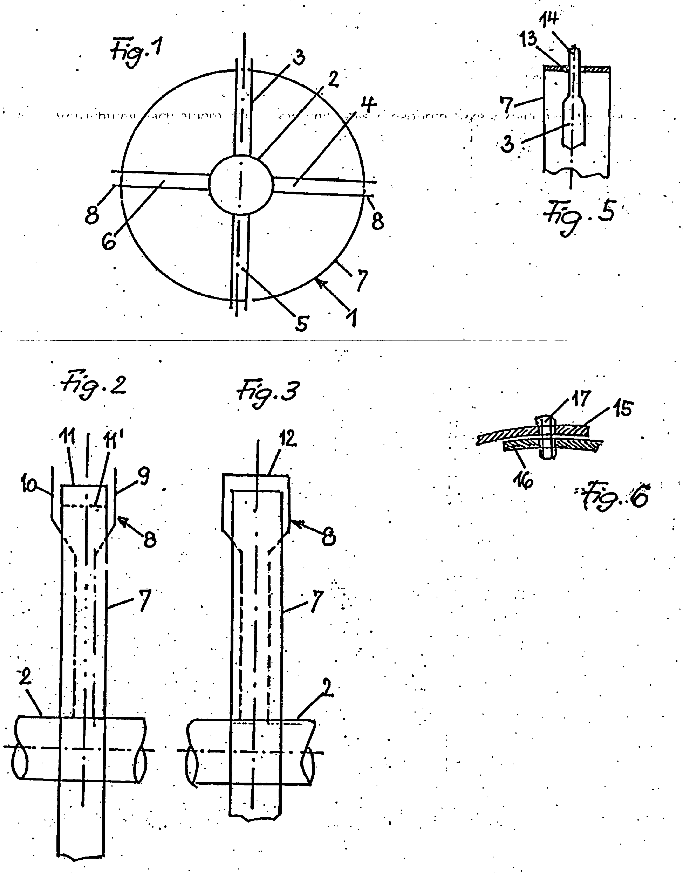

Fig. 1 zeigt in Aufsicht eine walzenförmige Bodenbearbeitungsvorrichtung mit parallel zueinander angeordneten Bodenbearbeitungswerkzeugen, insbesondere Ringelementen 1, 1', 1", die einzeln oder in ihrer Gesamtheit auf einem gemeinsamen oder in Abschnitte unterteilten Nabenrohr 2 befestigt sind.

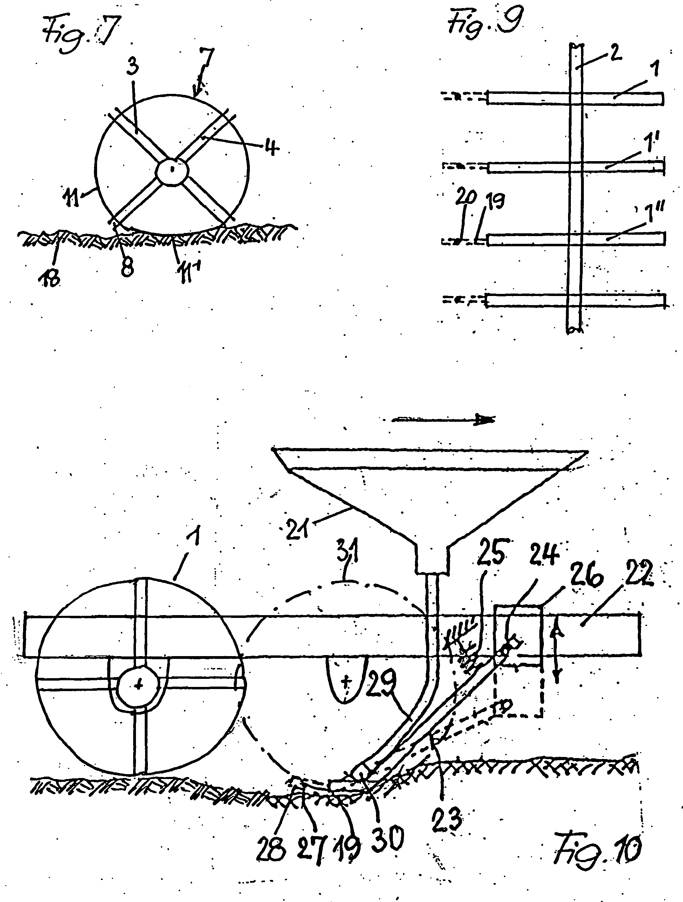

Vom Nabenrohr 2 verlaufen Speichen 3-6, die vorzugsweise mit dem Nabenrohr 2 verschweißt sind, radial nach außen. Die Außenenden der Speichen 3-6 sind in radialer Richtung mit einem Umfangsring 7 so verbunden, dass die Ringumfangsfläche 11 in Achsrichtung der Speiche 3-6 radial verschiebbar geführt ist, so dass dann, wenn ein Ringabschnitt zwischen zwei aufeinander folgenden Speichen 3-6 durch Bodenunstetigkeiten beansprucht wird, das Ringelement 1', 1" an der Verbindungsstelle radial entlang der jeweilige Speiche 3-6 um eine begrenzte Wegstrecke verschoben wird. Das radial äußere Ende der Speichen 3-6 ist, wie in Fig. 1 schematisch dargestellt, als Gabel 8 ausgebildet, die den Umfangsring 7 aufnimmt, sodass die Gabel als Führung für die Ringumfangsfläche dient. In einer weiteren Stufe stärkerer Beanspruchung wird dann der jeweils in Eingriff mit dem Boden stehende Ringabschnitt 11' (Fig. 7) nachgiebig deformiert.

Bei einer Ausführungsform nach Fig. 2 ist die Gabel 8 als nach außen offene Gabel mit Zinken 9 und 10 ausgebildet, die als Führungen für die Aufnahme des Umfangringes 7 wirken. Mit 11 ist die Außenfläche des Umfangsringes 7 bezeichnet, mit 11' die gleiche Umfangsfläche, wenn der Umfangsring durch Bodenkontakt deformiert wird, wie in Fig. 7 schematisch dargestellt. Die überstehende Länge der Gabelzinken 9 und 10 ist somit durch das Ausmaß der Deformation des entsprechenden Ringabschnittes 11' bestimmt.

In Fig. 3 ist die Gabel 8 am äußeren Ende der Zinken geschlossen bei 12 dargestellt, so dass ein torbogenartiger Abschluss entsteht, der entsprechend dem Ausmaß der Deformation des in Bodeneingriff stehenden Ringabschnittes 11' ausgelegt ist.

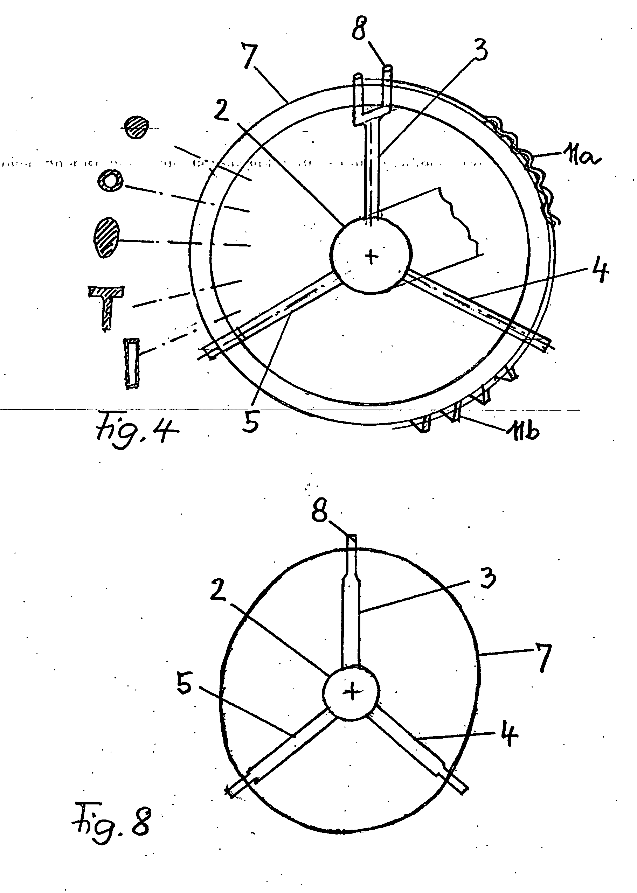

Fig. 4 zeigt ein Bodenbearbeitungswerkzeug 1 mit drei um 120° voneinander versetzten Speichen 3, 4, 5 auf dem Nabenrohr 2, jeweils mit einer Gabel 8 zur kontrollierten Aufnahme des Ringelementes bzw. Umfangsringes 7. Das Ringelement 7 hat wahlweise einen massiven kreisförmigen Querschnitt, einen rohrförmigen Querschnitt, einen ovalen Querschnitt, einen T-förmigen Querschnitt, bei dem die Länge des vertikalen Balkens größer ist als die Länge des horizontalen Balkens des T-Profils, oder einen rechteckförmigen Querschnitt mit größerer Höhe als Breite.

Die Ringumfangsfläche ist dabei wahlweise glatt, gewellt, gezackt oder in entsprechender Weise profiliert (11a, 11 b) ausgeführt, um die Kontraktion mit dem Boden zu verbessern, wobei bei dieser Ausführungsform die drei Speichen 3, 4, 5 gleiche radiale Länge haben, während bei der schematisch dargestellten Ausführungsform nach Fig. 8 die Speiche 3 eine größere radiale Länge als die beiden übrigen Speichen 4, 5 besitzt, so dass damit das Ringelement 7 nicht kreisförmig, sondern oval geformt und außermittig am Nabenrohr 2 befestigt ist.

Eine andere Lösung ergibt sich aus Fig. 5, bei der die Umfangsringfläche 11 eine Ausnehmung 13 aufweist, in der eine bolzenartige Verlängerung 14 der Speiche 3 in radialer Richtung geführt ist.

Die Ringumfangsfläche 11 ist in der Regel als geschlossene Ringfläche ausgeführt. Hierbei ist der Umfangsring z.B. als Flachfederstahlband an den beiden freien Enden zu einem Ring gebogen und verschweißt. Anstelle einer derartigen Schweißverbindung kann, wie in Fig. 6 dargestellt, eine Schraubverbindung 17 der beiden freien, sich überlappenden Enden vorgesehen sein, so dass auf die relativ komplizierte Verschweißung bei Federstahlmaterialien verzichtet werden kann.

Die Wirkungsweise der Erfindungsgemäßen Vorrichtung ist in Fig. 7 schematisch dargestellt. Wenn ein Ringabschnitt 11, 11' des Umfangsringes 7 mit dem Boden 18 in Eingriff kommt; wird in Abhängigkeit vorder Höheneinstellung der Achse des Nabenrohres 2 über den Boden Druck auf den Umfangsabschnitt 11' des geschlossenen Ringelementes 7 ausgeübt, derart, dass der Abschnitt 11' in der Führung des äußeren Speichenendes in radialer Richtung nach innen deformiert wird, solange der Bodeneingriff anhält.

Wird der Bodeneingriff an dieser Stelle auf Grund der Rotation des Ringelementes 7 aufgehoben bzw. kommt der anschließende Abschnitt 11 des Ringelementes mit dem Boden in Eingriff, kehrt aufgrund der Nachgiebigkeit des geschlossenen Ringelementes 7 der Abschnitt 11' wieder in seine Ausgangslage zurück, so dass die Umfangsfläche 7 des Ringes 7 eine fortlaufende walkende Bewegung ausführt, die bewirkt, dass anhaftendes Erdreich und eventuelle Pflanzenrückstände sich von den Speichen bzw. dem Umfangsring lösen und damit die Bodenbearbeitungsvorrichtung von sich aufbauendem Erdreich befreit wird.

Aus der schematischen Darstellung nach Fig. 9 ergibt sich eine Aufsicht auf eine Bodenbearbeitungswalze mit Ringelementen 1, 1', 1" auf dem Nabenrohr 2. In Reihe mit dem jeweiligen Ringelement 1, 1', 1" ist eine Särille 19 mit Saatgut 20 angedeutet. Dieses Saatgut 20 wird durch das zugeordnete Ringelement 1, 1', 1" angedrückt.

Eine walzenförmige Bodenbearbeitungsvorrichtung mit Sävorrichtung nach der Erfindung besteht, wie in Fig. 10 beispielhaft dargestellt, aus dem Maschinenrahmen 22, der die Bodenbearbeitungsvorrichtung mit Ringelementen 1, 1', 1" und einen sich über die gesamte Maschi-nenbreite erstreckenden Rechen 23 . Dieser Rechen 23 ist bei 24 unter Wirkung einer Vorspannfeder 25 gelagert. Der Rechen 23 ist an einem Querträger 26 befestigt, der am Maschinenrahmen vertikal und/oder horizontal verstellbar angeordnet ist und an dem eine Vielzahl von Rechenzinken 27 angeordnet sind, deren Anzahl der Anzahl der Ringelemente sowie der Särillen entspricht. Die einzelnen Rechenzinken sind im Winkel nach hinten und unten angestellte Zinken. Das untere Ende 28 der Rechenzinken ist z.B. nach hinten geknickt oder gebogen ausgeführt und bewirkt, dass Särillen gezogen werden.

Mit den Rechenzinken 27 sind Saatgut-Zuführschläuche 29 verbunden, die Saatgut aus einem Saatgut-Vorratsbehälter 21 an den Saatgut-Auslauf 30 abgeben, von wo das Saatgut auf das Saatbeet und in die Särille fällt. Wie mittels einer gestrichelt gezeichneten Linie angedeutet, kann eine zusätzliche Freiräumwalze 31, z.B. eine Sternwalze oder eine Stempelwalze herkömmlicher Ausführung beispielsweise höhenverstellbar am Maschinenrahmen 22 befestigt sein, die in Fahrtrichtung der Bodenbearbeitungsvorrichtung im Bereich des Rotationsdurchmessers angeordnet ist und die am Saatgutauslauf zwischen den Särillen den Boden ebnet.

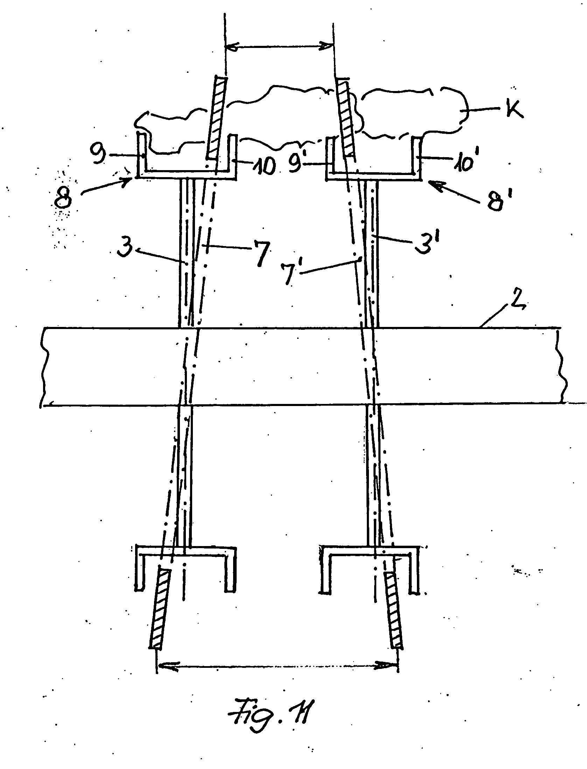

Der in Fig. 11 dargestellte Teilausschnitt einer Bodenbearbeitungsvorrichtung nach der Erfindung zeigt zwei unmittelbar aneinander anschließende, auf dem Nabenrohr 2 befestigte Speichen 3, 3' mit am radial äußeren Ende angeordneten Gabelköpfen 8, 8', in denen die Ringelemente 7, 7' geführt und durch die jeweiligen Zinken 9, 10 und 9', 10' in ihrer seitlichen Bewegung begrenzt sind. Hierbei ist die lichte Weite der Gabelköpfe 8, 8' wesentlich größer als die Breite der Umfangsflächen der Ringelemente 7 ausgebildet, so dass die Ringelemente, die in den Gabelköpfen 8, 8' geführt sind, seitwärts Bewegungen bis zum Anschlag an den Gabelzinken 9, 10 und 9', 10' ausführen können und die Ebenen der Ringelemente 7, 7' sich um einen durch die Gabelzinken 9, 10 und 9', 10' festgelegten Winkel zur Ebene der Speichen 3, 3' neigen können. Auf diese Weise kann der Abstand der beiden Ringelemente 7, 7' am Einlauf kleiner und am Auslauf entsprechend größer sein, so dass das am Einlauf aufgenommene Hindernis im Kreisbogen nach rückwärts transportiert und dort bei aufgehobener Klemmwirkung abgeworfen werden kann. Ein derartiges Zusammenwirken von nebeneinander angeordneten Ringelementen 7, 7' ergibt eine besonders vorteilhafte Arbeitsweise für die Beseitigung von Erdbrocken, Klutenknäueln K oder auch Steinen, die als Hindernis im oder auf dem Erdreich auftreten. Dabei kann die Umfangsfläche 11 der Ringelemente 7, 7' in Umfangsrichtung unterbrochene oder ununterbrochene Schneidvorrichtungen aufweisen, die insbesondere zum Durchtrennen von Klutenknäueln K geeignet sind.

## Patentansprüche

1. Walzenförmige Vorrichtung zum Verfestigen des Bodens bei Bodenbearbeitungs-und Sävorgängen mit Hilfe von rotierenden Bodenbearbeitungswerkzeugen (1, 1', 1") die auf einer horizontalen Nabenanordnung parallel zueinander befestigt sind, bei dem die Bodenbearbeitungswerkzeuge (1, 1', 1 ") als Ringelemente (7) mit einer Ringumfangsfläche (11) ausgebildet sind, die über Speichen (3 - 6) mit dem Nabenrohr (2) befestigt und in radialer und/oder horizontaler Richtung relativ zueinander kontrolliert verschiebbar und/oder auslenkbar angeordnet sind, **dadurch gekennzeichnet,**
**dass** die radial inneren Enden der Speichen (3 - 6) am Nabenrohr (2) befestigt und die radial äußeren Enden der Speichen (3 - 6) mit dem Ringelement (7) in radialer Richtung beweglich und auslenkbar verbunden sind, und zwar derart, dass die Ringumfangsfläche (11) in Achsrichtung der Speiche (3 - 6) radial verschiebbar geführt ist.

2. Vorrichtung nach Anspruch 1, **dadurch gekennzeichnet, dass** die Ringelemente (7) an zumindest drei Speichen (3-5) festgelegt sind.

3. Vorrichtung nach Anspruch 2, **dadurch gekennzeichnet, dass** die Speichen (3-5) gleiche radiale Länge aufweisen oder mindestens eine der Speichen (3-5) länger ist als die übrigen Speichen.

4. Vorrichtung nach einem der Ansprüche 1 bis 3, **dadurch gekennzeichnet, dass** die Ringelemente (7) deformierbar und vorzugsweise aus Stahl, insbesondere Federstahl ausgebildet sind.

5. Vorrichtung nach einem der Ansprüche 1 bis 4, **dadurch gekennzeichnet, dass** das radial äußere Ende der Speichen (3 - 6) als die Ringumfangsfläche aufnehmendes Kopfteil (8) ausgebildet ist.

6. Vorrichtung nach Anspruch 5, **dadurch gekennzeichnet, dass** das Kopfteil (8) in Form einer Gabel ausgebildet ist, die die Führung für das Ringelement (7) darstellt, wobei durch eine Überbrückung (12) der beiden Gabelzinken (9, 10) das Kopfteil (8) geschlossen ausgebildet sein kann.

7. Vorrichtung nach einem der Ansprüche 1 bis 6, **dadurch gekennzeichnet, dass** das Kopfteil (8) als Bolzen (14) ausgebildet ist, der in einer zugehörigen Ausnehmung (13) der Ringumfangsfläche (11) geführt ist.

8. Vorrichtung nach einem der Ansprüche 1 bis 7, **dadurch gekennzeichnet, dass** das radial äußere Ende (9, 10; 14) der Speichen (3-6) auf der Außenfläche (11) des Ringelementes (7) eine Traktion fördernde Unstetigkeiten (11 a, 11b) aufweist.

9. Vorrichtung nach Anspruch 8, **dadurch gekennzeichnet, dass** die Unstetigkeiten (11 a, 11 b) durch in Umfangsrichtung aufeinander folgende radiale Erhebungen und Vertiefungen (11 a, 11 b), z.B. in Form von Wellungen, Zacken oder dgl. gebildet sind.

10. Vorrichtung nach einem der Ansprüche 1 bis 9, **dadurch gekennzeichnet, dass** die Verschiebbarkeit bzw. Auslenkbarkeit zweistufig ausgebildet ist, und zwar derart, dass eine Stufe in Form einer radialen Bewegung der Gabel (8) relativ zur Umfangsfläche des Ringelementes (7), und eine nachfolgende Stufe durch Verformung des jeweiligen Abschnittes eines Ringelementes (11') mit Bodenkontakt ausgeführt ist.

11. Vorrichtung nach einem der Ansprüche 1 bis 10, **dadurch gekennzeichnet, dass** das Profil der Ringelemente (7) am radial äußeren Ende einen sich radial nach außen erweiternden Querschnitt, etwa in T-, V- oder dergl. Form aufweist, und dass die Abmessungen des Profils höher als breit sind und/oder dass der Querschnitt der Ringelemente kreisrund, oval oder dergl. ausgebildet ist.

12. Vorrichtung nach einem der Ansprüche 1 bis 11, **dadurch gekennzeichnet, dass** die Ringelemente (7) aus ihrer Ringebene beim Auftreffen auf ein massives Bodenhindernis vorübergehend auslenkbar ausgebildet sind und/oder dass den Bodenbearbeitungswerkzeuge (1, 1', 1") in Fahrtrichtung verlaufend eine Rechenvorrichtung (23) mit Saatgut-Zuführleitungen (29) und,Saatgut-Ausläufen (31) zugeordnet ist, durch die das Saatgut in die Särille abgelegt wird.

13. Vorrichtung nach Anspruch 1, **dadurch gekennzeichnet, dass** das Ringelement (7) aus einem Federmetallstreifen gebildet ist, dessen beide Enden (15, 16) einander überlappend ausgebildet sind und durch Schraub- oder Laschenverbindung (17) miteinander verbunden sind.

14. Vorrichtung nach einem der vorhergehenden Ansprüche, **dadurch gekennzeichnet, dass** die Gabelzinken (9, 10) einer Gabel (8) eine lichte Weite haben, die beachtlich größer ist als die Breite der Umfangsfläche des Ringelementes (7), derart, dass das Ringelement zwischen den beiden Gabelzinken (9, 10) einer Gabel quer zur Ringelementebene auslenkbar ist, und dass das Ringelement (7) lose und mit Abstand in den Gabeln (8) angeordnet ist.

## Claims

1. Roller-type device for compacting the soil during land cultivating and drilling processes by means of rotating ground cultivating tools (1, 1', 1 ") which are fixed parallel to one another on a horizontal hub assembly wherein the ground cultivating tools (1, 1', 1 ") are designed as ring elements (7) with annular peripheral surface (11) which are fixed by spokes (3 - 6) to the tubular hub (2) and are arranged so that they can be displaced and/or deflected in controlled manner in the radial and/or horizontal direction relative to one another, **characterised in that** the radially inner ends of the spokes (3 - 6) are fixed on the tubular hub (2) and the radially outer ends of the spokes (3 - 6) are connected to the ring element (7) so that they can be moved and deflected in the radial direction, namely in such a way that the annular peripheral surface (11) is guided radially displaceable in the axial direction of the spokes (3 - 6).

2. Device according to claim 1 **characterised in that** the ring elements (7) are fixed on at least three spokes (3 - 5).

3. Device according to claim 2 **characterised in that** the spokes (3- 5) have the same radial length or at least one of the spokes (3 - 5) is longer than the remaining spokes.

4. Device according to one of claims 1 to 3 **characterised in that** the ring elements (7) are designed to be deformable and are preferably made from steel, more particularly spring steel.

5. Device according to one of claims 1 to 4 **characterised in that** the radially outer end of the spokes (3 - 6) is designed as a head part (8) incorporating the annular peripheral surface.

6. Device according to claim 5 **characterised in that** the head part (8) is designed in the shape of a fork which forms the guide for the ring element (7) whereby the head part (8) can be designed closed by a bridge (12) over the two fork tines (9,10).

7. Device according to one of claims 1 to 6 **characterised in that** the head part (8) is designed as a bolt (14) which is guided in an associated recess (13) of the annular peripheral surface (11).

8. Device according to one of claims 1 to 7 **characterised in that** the radial outer end (9, 10, 14) of the spokes (3 - 6) has on the outside surface (11) of the ring element (7) traction-producing irregularities (11a, 11b).

9. Device according to claim 8 **characterised in that** the irregularities (11 a, 11 b) are formed by circumferentially successive radial protrusions and indentations (11a, 11 b), e.g. in the form of corrugations, zigzag formations or the like.

10. Device according to one of claims 1 to 9 **characterised in that** the displacement or deflection is able to move in two stages, namely in such a way that one stage is designed in the form of a radial movement of the fork (8) relative to the peripheral surface of the ring element (7) and a following stage is designed by the deformation of the relevant section of one ring element (11') on contact with the ground.

11. Device according to one of claims 1 to 10 **characterised in that** the profile of the ring elements (7) at the radial outer end has a radially outwardly expanding cross-section, such as in a T- , V- or similar form, and that the dimensions of the profile are higher than the width and/or that the cross-section of the ring elements is circular, oval or the like.

12. Device according to one of claims 1 to 11 **characterised in that** the ring elements (7) are designed so that when striking a solid obstruction on the ground they can be temporarily deflected from their annular plane and/or that the ground cultivating tools (1, 1', 1 ") are assigned running in the travel direction a rake device (23) with seed supply lines (29) and seed outlets (31) through which the seeds are deposited in the furrows.

13. Device according to claim 1 **characterised in that** the ring element (7) is formed from a spring metal strip whose two ends (15, 16) are designed to overlap one another and are connected to one another by screws or bracket plates (17).

14. Device according to one of the preceding claims **characterised in that** the forked tines (9, 10) of a fork (8) have an internal width which is considerably larger than the width of the peripheral surface of the ring element (7) so that the ring element can be deflected between the two forked tines (9, 10) of one fork transversely to the plane of the ring element, and that the ring element (7) is mounted loose and at a distance in the forks (8).

## Revendications

1. Dispositif en forme de rouleau pour la consolidation du sol dans le cas d'opération de traitement du sol et de semis à l'aide d'outils rotatifs de traitement de sol (1, 1', 1 "), qui sont fixés parallèlement entre eux sur un dispositif de moyeu horizontal, les outils de traitement de sol (1, 1', 1 ") étant conçus sous forme d'éléments annulaires (7) avec une surface périphérique de bague (11), qui sont fixés au moyen de rayons (3 à 6) au tuyau de moyeu (2) et sont disposés dans le sens radial et/ou dans le sens horizontal de façon à pouvoir coulisser et/ou dévier de façon contrôlée les uns par rapport aux autres,
**caractérisé en ce que** :
les extrémités radialement intérieures des rayons (3 à 6) sont fixées sur le tuyau de moyeu (2) et les extrémités radialement extérieures des rayons (3 à 6) sont reliées à l'élément annulaire (7) de façon à pouvoir bouger et dévier dans le sens radial, et ce de telle sorte que la surface périphérique de bague (11) soit guidée de façon à pouvoir coulisser radialement dans le sens d'axe du rayon (3 à 6).

2. Dispositif selon la revendication 1, **caractérisé en ce que** les éléments de bague (7) sont fixés sur au moins trois rayons (3 à 5).

3. Dispositif selon la revendication 2, **caractérisé en ce que** les rayons (3 à 5) présentent des longueurs radiales identiques ou au moins l'un des rayons (3 à 5) est plus long que les autres rayons.

4. Dispositif selon l'une des revendications 1 à 3, **caractérisé en ce que** les éléments de bague (7) sont déformables et sont conçus de préférence en acier, en particulier en acier à ressort.

5. Dispositif selon l'une des revendications 1 à 4, **caractérisé en ce que** l'extrémité radialement extérieure des rayons (3 à 6) est conçue sous forme de partie supérieure (8) recevant la surface périphérique de bague.

6. Dispositif selon la revendication 5, **caractérisé en ce que** la partie supérieure (8) est conçue sous forme de fourche qui représente le guide pour l'élément annulaire (7), la partie supérieure (8) pouvant être conçue fermée par un recouvrement (12) des deux dents de fourche (9, 10).

7. Dispositif selon l'une des revendications 1 à 6, **caractérisé en ce que** la partie supérieure (8) est conçue sous forme de boulon (14) qui est guidé dans un évidement (13) spécifique de la surface périphérique de bague (11).

8. Dispositif selon l'une des revendications 1 à 7, **caractérisé en ce que** l'extrémité (9, 10 ; 14) radialement extérieure des rayons (3 à 6) présente des discontinuités (11a, 11b) favorisant une traction sur la surface extérieure (11) de l'élément annulaire (7).

9. Dispositif selon la revendication 8, **caractérisé en ce que** les discontinuités (11 a, 11 b) sont formées par des élévations et des cavités (11 a, 11 b) radiales se succédant dans le sens périphérique, par exemple, sous forme d'ondulations, de dents ou similaires.

10. Dispositif selon l'une des revendications 1 à 9, **caractérisé en ce que** la possibilité de coulissement ou de déviation est conçue avec deux niveaux, et ce de telle sorte qu'un niveau soit réalisé sous la forme d'un déplacement radial de la fourche (8) par rapport à la surface périphérique de l'élément annulaire (7), et un niveau consécutif soit réalisé par la déformation de la partie respective d'un élément annulaire (11') avec contact du sol.

11. Dispositif selon l'une des revendications 1 à 10, **caractérisé en ce que** le profil des éléments annulaires (7) présente sur l'extrémité radialement extérieure une section s'élargissant radialement vers l'extérieur, par exemple en forme de T, de V ou similaire, et **en ce que** les dimensions du profil sont plus hautes que larges et/ou **en ce que** la section des éléments annulaires est conçue circulaire, ovale ou similaire.

12. Dispositif selon l'une des revendications 1 à 11, **caractérisé en ce que** les éléments annulaires (7) sont conçus de façon à pouvoir dévier provisoirement de leur plan annulaire lors de l'arrivée sur un obstacle au sol important et/ou **en ce qu'**un dispositif de râteau (23), doté de conduites d'arrivée de semence (29) et de sortie de semence (31), par lesquelles la semence est déposée dans le sillon, est attribué aux outils de traitement de sol (1, 1', 1 ") et est agencé dans le sens de marche.

13. Dispositif selon la revendication 1, **caractérisé en ce que** l'élément annulaire (7) est formé à base d'une bande de métal à ressort, dont les deux extrémités (15, 16) sont conçues se chevauchant et sont reliées l'une à l'autre par une liaison à vis ou à patte (17).

14. Dispositif selon l'une des revendications précédentes, **caractérisé en ce que** les dents de fourche (9, 10) d'une fourche (8) ont une largeur intérieure qui est beaucoup plus grande que la largeur de la surface périphérique de l'élément annulaire (7), de telle sorte que l'élément annulaire entre les deux dents (9, 10) d'une fourche puisse être dévié transversalement au plan de l'élément annulaire, et **en ce que** l'élément annulaire (7) est disposé de façon lâche et à distance dans les fourches (8).
